Europäisches Patentamt

European Patent Office

Office européen des brevets

(11) Publication number: **0 509 155 A1**

# EUROPEAN PATENT APPLICATION

(21) Application number: **91302626.6**

(22) Date of filing: **26.03.91**

(51) Int. Cl.⁵: **F24D 5/08**, G05D 23/19, F23N 1/10

(43) Date of publication of application:
**21.10.92 Bulletin 92/43**

(84) Designated Contracting States:
**DE FR IT**

(71) Applicant: **NOR-RAY-VAC LIMITED**
**8 Prince George's Road**
**London SW19 2PX(GB)**

(72) Inventor: **Arnold, John Frank**
**20 The Orchard**
**North Holmwood, Dorking, Surrey(GB)**

(74) Representative: **Meddle, Alan Leonard et al**
**FORRESTER & BOEHMERT**
**Franz-Joseph-Strasse 38**
**W-8000 München 40(DE)**

(54) **Radiant heating systems.**

(57) A radiant heating system comprises a radiant heating tube (1) suspended in a building (2) and provided with burners means comprising at least one burner unit (10) producing hot combustion gases which are drawn through the heating tube by a vacuum pump (6) to heat the tube, the heat output of the burner means being dependent upon the value of the negative pressure applied to the burner means through the heating tube. The burner means is arranged to have, at a predetermined normal operating value of negative pressure, a heat output calculated to maintain a desired temperature inside the building when the outside air temperature has a preselected value. The outside air temperature is sensed by a thermostat (8) during operation of the system and the value of the negative pressure applied to the burner means is increased by adjustable damping means (7, 11) when the outside air temperature falls below the preselected value, thereby increasing the heat output of the burner means to meet the increased thermal load. Constructing and operating the heating system in this way permits the capital cost of the system to be reduced in comparison to systems constructed and operated in a conventional manner.

Fig. 1.

THIS INVENTION relates to improvements in or relating to radiant heating systems for buildings.

A known radiant heating system comprises a radiant heating tube which is suspended in the building and is heated by hot combustion gases produced by burner means comprising one or more burner units distributed along the length of the tube, the combustion gases from the burner units being drawn through the heating tube by a vacuum pump which exerts a negative pressure in the heating tube. The heating tube may comprise a plurality of branches each provided with burner means and connected to the vacuum pump by a manifold portion of the heating tube.

Each burner unit receives fuel gas under pressure, reduces the pressure of the gas to atmospheric pressure and supplies the gas at atmospheric pressure to a burner mixing chamber through a gas supply orifice. Ambient air at atmospheric pressure is also supplied to the mixing chamber through an air supply orifice and the resulting combustible mixture of gas and air at atmospheric pressure is drawn into a burner head disposed within the heating tube, where the mixture is ignited and burnt within the heating tube to generate the hot combustion gases which are then drawn through the heating tube by the vacuum pump. The air and gas at atmospheric pressure are drawn into the mixing chamber in stoichiometric properties preset by the sizes of the gas and air supply orifices within the range of negative pressures which can be exerted on the burner mixing chamber by the vacuum pump. The flow rate at which the gas and air mixture is supplied to the burner head depends upon the value of the applied negative pressure which normally lies in the range of minus 6 to 8 mbar.

When designing such a radiant heating system for a particular building, it is conventional to calculate the maximum heat output the system is required to provide and to construct the system on the basis of this calculated maximum heat output. The maximum heat output required is calculated by determining the heat loss from the building as a result of conduction through the structure of the building and heat loss from the building by ventilation. The heat lost in this way is proportion to the difference in temperature between the temperature inside the building and the outside air temperature. The maximum heat loss is thus proportional to the difference between the desired temperature to be maintained inside the building and the anticipated minimum outside air temperature. This maximum heat loss forms the basis on which the required heating capacity of the heating system is calculated and therefore determines the capital cost of the system.

It is known to control the operation of a radiant heating system, having a heating capacity determined in the conventional manner, using a thermostat which senses the temperature within the building and controls a motorised valve at the inlet of the vacuum pump to reduce the negative pressure applied to the burner units through the heating tube from an initial normal operating value, so as to reduce the flow rate of the combustible air and gas mixture drawn into each burner head and therefore reduce the heat output of each burner unit, when the temperature within the building reaches a first threshold. When a second, higher threshold is reached by the internal temperature, the thermostat acts to shut off the burner units.

This conventional approach to the design and control of radiant heating systems means that the system is designed to run for most of its operating time at less than its maximum heating capacity and the capital cost of the system is correspondingly high.

It is an object of the present invention to enable a radiant heating system to be constructed and operated in a more efficient and cost effective manner.

Accordingly, in one aspect, the present invention provides a method of operating a radiant heating system in which a radiant heating tube suspended in a building is provided with burner means comprising at least one burner unit producing hot combustion gases which are drawn through the heating tube by a vacuum pump to heat the tube, the heat output of the burner means being dependent on the value of the negative pressure applied to the burner means through the heating tube, which method comprises providing the system with burner means having, at a predetermined normal operating value of negative pressure, a heat output calculated to maintain a desired temperature inside the building when the outside air temperature has a preselected value, sensing the outside air temperature during operation of the system and increasing the value of the negative pressure applied to the burner means when the outside air temperature falls below the preselected value, thereby increasing the heat output of the burner means to meet the increased thermal load.

In another aspect, the present invention provides a radiant heating system comprising a radiant heating tube suspended in a building and provided with burner means comprising at least one burner unit producing hot combustion gases which are drawn through the heating tube by a vacuum pump to heat the tube, the heat output of the burner means being dependent on the value of the negative pressure applied to the burner means through the heating tube, in which system the burner means has, at a predetermined normal operating value of negative pressure, a heat output calculated to maintain a desired temperature inside the building when the outside air temperature has a preselected value, means are provided for sensing the outside air temperature during operation of the system and means are provided for increasing the value of the negative pressure applied to the burner means when the outside air temperature falls below the preselected value, thereby to increase the heat output of the burner means to meet the increased thermal load.

Conveniently, the means for increasing the value of the negative pressure applied to the burner means comprises adjustable damper means provided in the heating tube between the burner means and the vacuum pump.

In one embodiment of the invention, the heating tube comprises a plurality of branches each provided with burner means and connected to the vacuum pumps by a manifold portion of the heating tube, the damper means comprising an adjustable main damper in the manifold portion of the heating tube and an adjustable subsidiary damper disposed in each branch of the heating tube between the burner means and the main damper.

In another embodiment of the invention the means for increasing the value of the negative pressure applied to the burner means comprises adjustable damper means provided in an air dilution branch tube which is connected to the heating tube between the burner means and the vacuum pump and which is open to ambient air.

The heating tube may comprise a plurality of branches each provided with burner means and connected to the vacuum pump by a manifold portion of the heating tube, the air dilution branch tube being connected to the manifold portion of the heating tube and the means for increasing the value of the negative pressure applied to the burner means further comprising an adjustable subsidiary damper disposed in each branch of the heating tube between the burner means and the manifold portion of the heating tube.

Desirably, the damper means is adjustable by an electric motor controlled by an output signal from the means for sensing the outside air temperature.

Preferably, the preselected value of the outside air temperature is higher than an anticipated minimum outside air temperature.

In order that the invention may be more readily understood, an embodiment therefore will now be described, by way of example, with reference to the accompanying drawings, in which:

Figure 1 is a diagrammatic illustration of a radiant heating system for a building embodying the present invention;

Figure 2 is a diagrammatic illustration of a burner head employed in the heating system of Figure 1;

Figure 3 is a cross-sectional view on the line A-A of Figure 2;

Figure 4 is a diagrammatic illustration of a motor-driven damper employed in the heating system of Figure 1;

Figure 5 is a graph illustrating the operation of the heating system of Figure 1 in dependence upon the outside air temperature; and

Figure 6 illustrates an alternative method of adjusting the value of the negative pressure applied to burner units of the heating system.

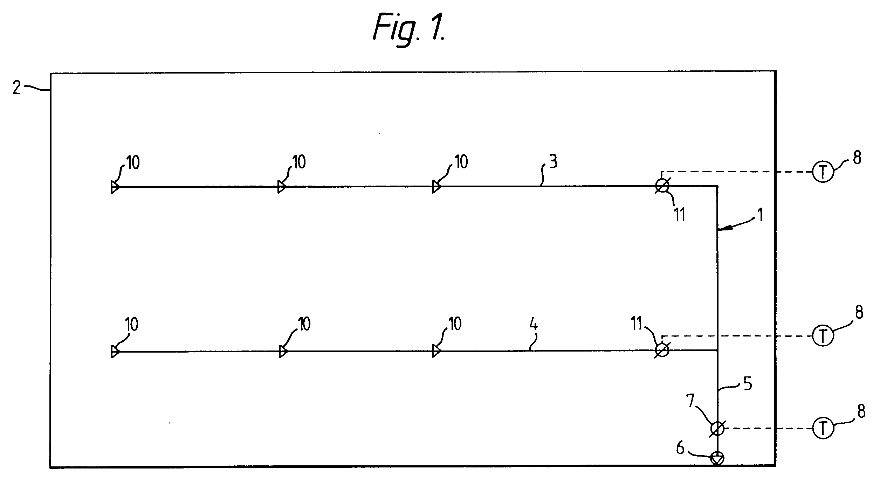

Referring firstly to Figure 1, an exemplary heating system embodying the present invention comprises a radiant heating tube 1 suspended in known manner within a building 2 to provide heating within the building by a downward radiation of infrared energy. The radiant heating tube 1 comprises two branches 3 and 4 connected in parallel to a manifold portion 5 of the heating tube 1.

The manifold portion 5 of the heating tube 1 is connected to a vacuum pump 6 for exerting a negative pressure on the inside of the radiant tube 1 and contains a main motor-driven adjustable damper 7 at the inlet of the pump 6, which damper 7 is connected to an external thermostat 8 serving to sense the air temperature outside the building 2 and to adjust the damper 7 to adjust the overall operation of the heating system in dependence upon the sensed external air temperature as hereinafter described. The outlet of the vacuum pump 6 discharges outside the building 2.

Each of the branches 3 and 4 of the heating tube 1 is provided with heating means in the form of three gas burner units 10 each producing hot combustion gases which are drawn through the interior of the heating tube 1 by the vacuum pump 6 to heat the tube and cause it to emit radiant energy. A subsidiary motor-driven adjustable damper 11 is provided within each of the branches 3 and 4 of the heating tube 1 and is controlled by the external thermostat 8 as hereinafter described to control the operation of the associated branch of the heating tube 1 in dependence upon the external air temperature.

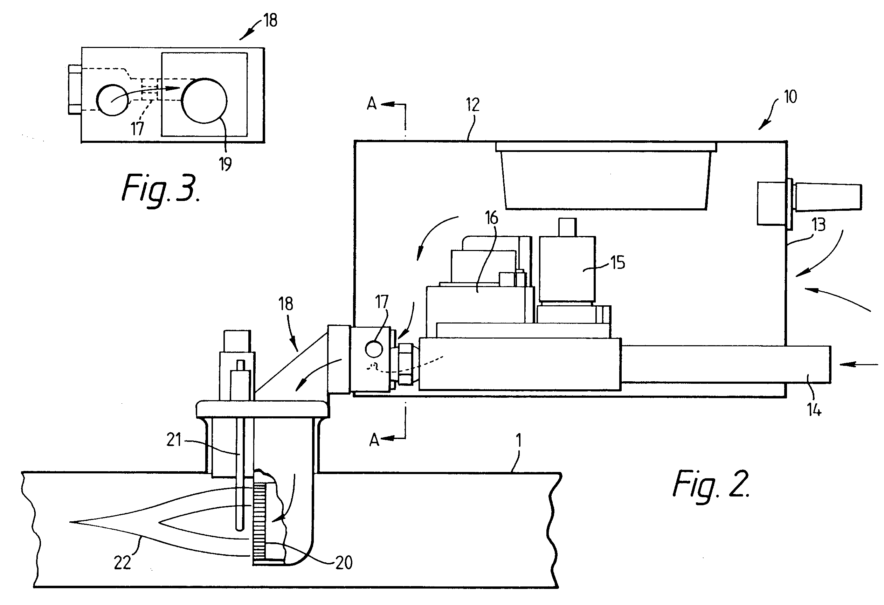

As illustrated in Figures 2 and 3, each burner unit 10 comprises a housing 12 having an open rear end 13 through which ambient air in the building is admitted to the housing 12. A suitable pressurized supply (not shown) of fuel gas is connected to a gas inlet pipe 14 which leads via an on-off valve 15 to a known gas pressure governor 16 which operates to deliver the gas fuel at atmospheric pressure to a gas inlet orifice 17 of a mixing chamber 18 which is also provided with an air inlet orifice 19 through which air at atmospheric pressure within the housing 12 is also admitted to the chamber 18. The negative pressure applied to the heating tube 1 by the vacuum pump 6 draws gas from the governor 16 through the gas inlet orifice 17 into the mixing chamber 18 where it mixes with the air also drawn through the air inlet orifice 19 to form a stoichiometric combustible mixture which is drawn out of the mixing chamber 18 through a perforated burner plate 20 and ignitied by ignition device 21 to burn as flame 22 within the heating tube 1. The hot combustion gases from the flame 22 are drawn through the radiant tube 1 by the pump 6, so that the heating tube 1 is heated to a temperature at which it radiates infrared energy to the interior of the building 2 in which the heating tube 1 is installed. The combustion gases are finally discharged outside the building 2 by the vacuum pump 6 after passing through the heating tube 1.

The composition of the gas and air mixture which is burnt by the burner unit 10 is preset by the dimensions of the gas and air inlet orifices 17 and 19 at the entry to the mixing chamber. The flow rate of the combustible air and gas mixture through the burner plate 20, and thus the heat output of the burner 10, is determined by the level of the negative pressure applied to the burner unit 10 by the vacuum pump 8.

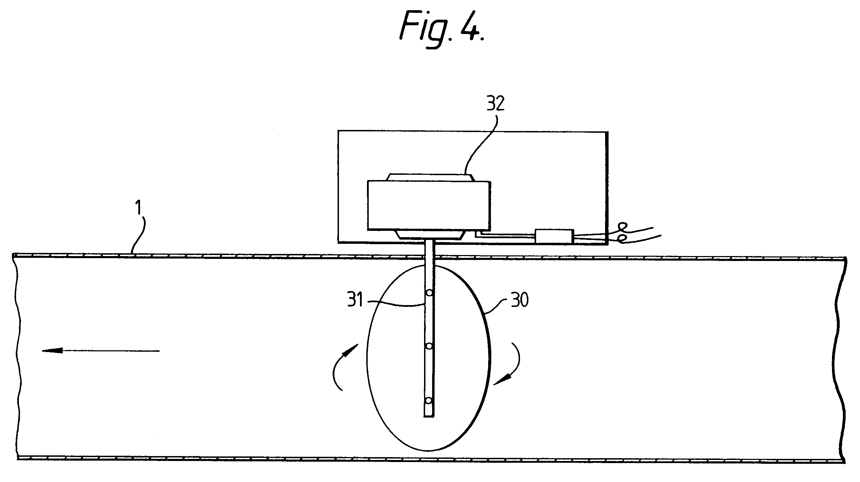

With reference to Figure 4, each of the motor-driven dampers 7 and 11 comprises circular damper plate 30 attached to the spindle 31 of an electric motor 32. In a normal operating position of the damper, the damper plate 30 is positioned at right angles to the central axis of the heating tube 1. In this normal condition, the dampers constricts the cross-section of the heating tube 1 so that a predetermined normal operating value of negative pressure is applied to the burner units 10 in the heating tube 1 upstream of the damper. Upon energisation of the motor 32, the damper plate 30 is rotated through 90° to the boost position shown in Figure 3 in which the damper plate 30 extends along the central axis of the radiant tube 1, thereby increasing the open cross-section of the heating tube 1 and increasing the value of the negative pressure applied to the burner units 10 in the heating tube upstream of the damper. The external thermostat 8 connected to the motor 32 and provides an output signal to actuate the motor to move the damper plate 30 from its normal position to its boost position upon detection of a preselected value of the outside air temperature which is higher than an anticipated minimum outside air temperature.

Referring again to Figure 1, the heat output of the heating system is designed to be sufficient to maintain a desired temperature within the building 2 with the preselected value of the outside temperature above the anticipated minimum external air temperature and with the dampers 7 and 11 in their closed normal position. Upon sensing an outside temperature lower than the preselected outside temperature value, the thermostat 8 cause the dampers 7 and 11 to move to their open boost position, thereby increasing the value of the negative pressure applied to the interior of the radiant tube 1 beyond the dampers 7 and 11, thereby increasing the heat output of the burners 10 to meet the increased thermal load. Since outside temperatures below the preselected value are only likely to be experienced for a short time during the time the heating system is operative, the heating system will only operate in this "boosted" condition for short periods. However, because the normal operating capacity of the heating system is based on an outside air temperature above the anticipated minimum outside air temperature, the capital cost of the heating system is lower than a system designed in the conventional manner.

It has been found that the capacity of a heating system embodying the invention can be boosted by up to 20% from its normal operating capacity. For example, if, according to conventional design, a plant capacity of 1000 KW is required to maintain an internal temperature of 20°C on the basis of a -4°C anticipated minimum outside air temperature, then this may be replaced by a heating system embodying the invention with a heat output of 830KW calculated on the basis of a preselected value pf 0°C for the outside air temperature, the heat output being increased for operation of the system with an outside air temperature below 0°C by increasing the applied negative pressure from its normal value of minus 6.25 to a boost value of approximately minus 10 mbars.

The graph of Figure 4 illustrates the temperature dependent operation of such a heating system embodying the invention. The system operates normally at its nominal rating of 830 KW as long as the external air temperature remains above 0°C Upon the external air temperature dropping below 0°C as indicated at point $t_1$ on the graph, the thermostat opens the dampers 7 and 11 to increase the applied negative pressure from its normal value to the boost value to cause the heating system to operate at its boosted level of heat output. Once the external air temperature again rises above 0°C at point $t_2$, the thermostat 8 operates to close the dampers 7 and 11 to reduce the negative pressure to its normal value and return the heating system to operation at its normal, lower heating capacity.

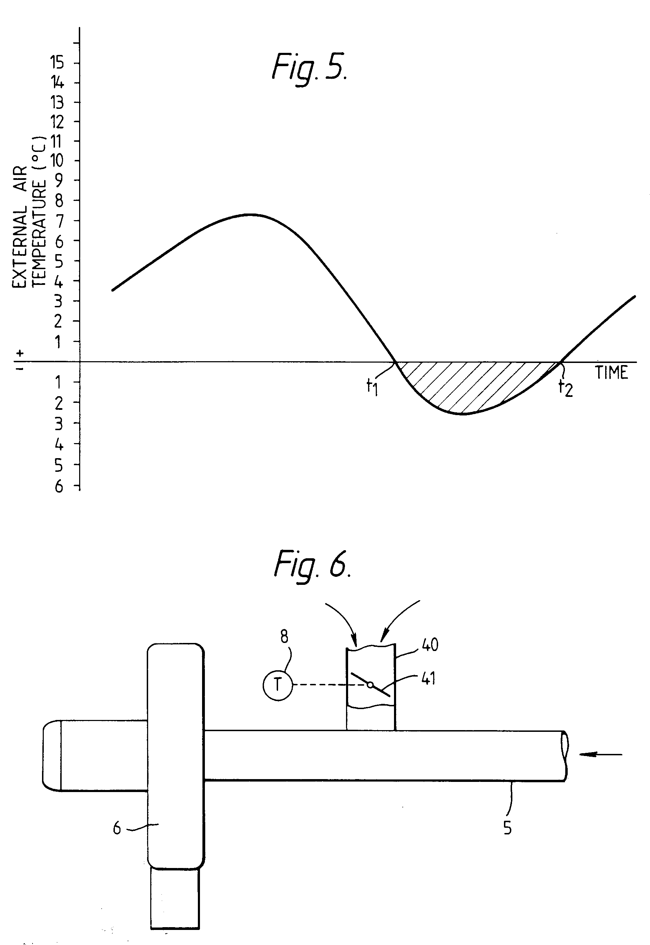

An alternative way of varying the negative pressure applied to the burner units 10 is illustrated in Figure 6 which shows an air dilution branch tube 40 connected to the manifold portion 5 of the heating tube 1 upstream of the vacuum pump 6. The air dilution branch tube 40 is open to ambient air and contains a motor-driven adjustable damper 41 which may be constructed as described with reference to Figure 4 and which replaces the main damper 7 in Figure 1. The damper 41 is normally open to admit diluting air to the manifold portion 5 of the tube 1 through the branch tube 40 and is closable in response to the thermostat 8 sensing an outside temperature lower than the preselected outside temperature value, thereby cutting off the flow of diluting air and increasing the negative pressure exerted on the manifold portion 5 of the heating tube 1.

**Claims**

1. A method of operating a radiant heating system in which a radiant heating tube suspended in a building is provided with burner means comprising at least one burner unit producing hot combustion gases which are drawn through the heating tube by a vacuum pump to heat the tube, the heat output of the burner means being dependent on the value of the negative pressure applied to the burner means through the heating tube, which method comprises providing the system with burner means having, at a predetermined normal operating value of negative pressure, a heat output calculated to maintain a desired temperature inside the building when the outside air temperature has a preselected value, sensing the outside air temperature during operation of the system and increasing the value of the negative pressure applied to the burner means when the outside air temperature falls below the preselected value, thereby increasing the heat output of the burner means to meet the increased thermal load.

2. A method according to claim 1, comprising increasing the value of the negative pressure applied to the burner means by adjusting damper means provided in the heating tube between the burner means and the vacuum pump.

3. A method according to claim 1 or 2, wherein the preselected value of the outside air temperature is higher than an anticipated minimum outside air temperature.

4. A radiant heating system comprising a radiant heating tube suspended in a building and provided with burner means comprising at least one burner unit producing hot combustion gases which are drawn through the heating tube by a vacuum pump to heat the tube, the heat output of the burner means being dependent on the value of the negative pressure applied to the burner means through the heating tube, in which system the burner means has, at a predetermined normal operating value of negative pressure, a heat output calculated to maintain a desired temperature inside the building when the outside air temperature has a preselected value, means are provided for sensing the outside air temperature during operation of the system and means are provided for increasing the value of the negative pressure applied to the burner means when the outside air temperature falls below the preselected value, thereby to increase the heat output of the burner means to meet the increased thermal load.

5. A system according to claim 4, wherein the means for increasing the value of the negative pressure applied to the burner means comprises adjustable damper means provided in the heating tube between the burner means and the vacuum pump.

6. A system according to claim 5, wherein the heating tube comprises a plurality of branches each provided with burner means and connected to the vacuum pumps by a manifold portion of the heating tube, the damper means comprising an adjustable main damper in the manifold portion of the heating tube and an adjustable subsidiary damper disposed in each branch of the heating tube between the burner means and the main damper.

7. A system according to claim 4, wherein the means for increasing the value of the negative pressure applied to the burner means comprises adjustable damper means provided in an air dilution branch tube which is connected to the heating tube between the burner means and the vacuum pump and which is open to ambient air.

8. A system according to claim 7, wherein the heating tube comprises a plurality of branches each provided with burner means and connected to the vacuum pump by a manifold portion of the heating tube, the air dilution branch tube being connected to the manifold portion of the heating tube and the means for increasing the value of the negative pressure applied to the burner means further comprising an adjustable subsidiary damper disposed in each branch of the heating tube between the burner means and the manifold portion of the heating tube.

9. A system according to any one of claims 5 to 8, wherein the damper means is adjustable by an electric motor controlled by an output signal from the means for sensing the outside air temperature.

10. A system according to any one of claims 4 to 7, wherein the preselected value of the outside air temperature is higher than an anticipated minimum outside air temperature.

# Fig. 1.

EP 0 509 155 A1

18

17

19

*Fig. 3.*

A

12

10

16

15

18

17

13

A

21

14

1

22

20

*Fig. 2.*

8

Fig. 4.

Fig. 5.

Fig. 6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 070 360 (PHOENIX BURNERS LIMITED) * page 4, line 29 – page 5, line 8; page 6, line 35 – page 7, line 35 * | 1,2,4-6 | F 24 D 5/08 G 05 D 23/19 F 23 N 1/10 |
| X | EP-A-0 392 591 (HOAFRAY-O-THERM B.V.) * column 1, line 46 – column 2, line 32 * | 1,2,4,5 ,7 | |
| E | GB-A-2 236 406 (RADIANT SYSTEMS TECHNOLOGY LTD.) * whole document * | 1-10 | |
| | | | **TECHNICAL FIELDS SEARCHED (Int. Cl.5)** |
| | | | F 23 N F 24 D G 05 D |

The present search report has been drawn up for all claims

| Place of search | Date of completion of the search | Examiner |
|---|---|---|
| BERLIN | 19-11-1991 | PIEPER C |

EPO FORM 1503 03.82 (P0401)